# EUROPEAN PATENT SPECIFICATION

(11) **EP 2 185 482 B1**
(45) Date of publication and mention of the grant of the patent: **22.02.2017**
(21) Application number: 08787228.9
(22) Date of filing: 14.08.2008
(51) Int. Cl.: C03C 27/06, C03C 27/10, E06B 1/36, E06B 3/62

(54) **A GLAZING JOINT**
VERGLASUNGSVERBINDUNG
JOINT DE VITRAGE

(30) Priority: 14.08.2007 EP 07114298
(43) Date of publication of application: 19.05.2010
(73) Proprietor: Lafuco A/S, 2635 Ishøj (DK)
(72) Inventor: HANSEN, Frank, DK-2635 Ishøj (DK); LARSEN, Søren, Peter, DK-2635 Ishøj (DK)
(74) Representative: Inspicos P/S
(86) International application number: PCT/EP2008/060695
(87) International publication number: WO 2009/021993

(56) References cited:
- FR-A- 2 077 287
- GB-A- 2 404 387
- US-A- 3 893 271
- US-A- 4 765 102
- US-A- 4 936 068

## Description

### FIELD OF THE INVENTION

The present invention relates to a glazing joint for joining side surfaces at least two sheets of glass to each other by means of the glazing joint. Moreover, the present invention relates to a glass adapted to be fastened to the glazing joint. Furthermore, the present invention relates to a glass wall comprising the glazing joint and two sheets of glass. Finally, the present invention relates to a method of erecting a glass wall comprising the glazing joint.

### BACKGROUND OF THE INVENTION

In modern commercial buildings it is more and more frequent that walls are formed partly or completely out of glass. Glass is used as a means for allowing daylight to propagate into the centre of the building, as a means of increasing the transparency of the organization and/or as an architectural tool. Most glass walls are formed out of a plurality of glass sheets which are joint to each other so as to define the glass wall.

WO 2004/039908 discloses a glazing joint especially for glazed partition walls. The glazing joint defines recesses each for receiving a sheet of glass, so as to allow the glasses to be fastened to the glazing joint. Due to the provision of the recesses, the glasses may be fastened to each other via the glazing joints in predetermined angular positions.

GB 2 404 387 discloses an elongate section for use between edges of transparent panels.

Other background art may be seen in US 2005/0126090 and EP 1 435 424.

When glass walls are installed in buildings, construction workers are often faced with the fact that the geometry of most buildings deviate from construction drawings in that walls, floors or ceilings are uneven or are not provided in the correct angles relative to each other. As an example walls and floors which are supposed to be provided at right angles to each other may be provided in an angle different form such a right angle. Such deviations make it more difficult to install the glass walls, and, thus, it is desirable that one or more of the elements of the glass wall allow the glass wall to be adapted to its surroundings. Accordingly, it is an object of an embodiment of the present invention to provide a glazing joint which allows two sheets of glass to be fastened to each other in an infinite number of angular positions.

Moreover, it is an object of an embodiment of the present invention to provide an alternative to known solutions.

Furthermore, it is an object of an embodiment of the present invention to enhance the versatility of glass walls as an architectural tool.

Additionally, it is an object of an embodiment of the present invention to provide a glazing joint which allows electrical devices such as lamps to be mounted on a glass wall in such a way that the power supplying lines are not visible.

It is an object of an embodiment of the present invention to provide a glazing joint comprising fire protection means.

### DESCRIPTION OF THE INVENTION

In a FIRST aspect the present invention relates to a glazing joint for joining at least two sheets of glass to each other, each glass defining a front and a rear surface interconnected by a side surface defining a recess for receiving at least a part of the glazing joint, wherein the glazing joint has a circular cross-section and defines an outer surface adapted to be received in the recess of the two sheets of glass so as to allow the sheets of glass to be fastened to the glazing joint in an infinite number of angular positions relative to each other characterised in that, wherein at least a part of the outer surface of the glazing joint comprises an adhesive for adhering the sheets of glass to the glazing joint.

One advantage of the glazing joint of the present invention is that the glazing joint allows construction workers to adjust two sheets of glass to be joined to each other, by rotating one of said sheets relative to the other sheet and about the glazing joint. This allows the construction workers to adapt the glass wall to the geometry of location at which the glass wall is to be erected, by choosing the appropriate relative angular position of the two sheets of glass.

From a manufacturing point of view, the glazing joint according to the present invention allows a manufacturer to produce one versatile glazing joint which may be used to position two sheets of glass in an infinite number of positions, rather than manufacturing a large number of different glazing joints each of which allows two sheets of glass to be positioned in a predetermined and non-adjustable angular position relative to each other. Such a versatile glazing joint is also desirable from the construction workers point of view as he only needs to keep a stock of one kind of glazing joint instead of a plurality of different glazing joints.

From an architectural point of view, the glazing joint according to present invention increases the design freedom as most relative angles between two sheets of glass is now possible. It will be appreciated that this is desirable from an architectural point of view, as most architects constantly seeks new ways of expressing themselves.

The glass walls may be adapted to be used indoor and/or outdoor. Moreover, the glass walls according to the present invention may be adapted to allow other sheets of material to be joined to the sheets of glass by means of the glazing joint according to the present invention. Such other materials may be sheets of metal, wood, plastics, etc.

The glass may be natural or artificial glass, such as Plexiglas, plastic glass, or fibreglass. Moreover, the glass may be laminated, hardened, coloured, frosted and/or provided with a film, such as a film for preventing heat and/or ultraviolet radiation from propagating through the glass.

The glass defines a front and a rear surface which in most embodiments extend parallel to each other. The front and rear surface are separated by a side surface which may define a plurality of sections. As an example a quadrangular sheet of glass may define four edge sections.

The sheets of glass may be provided in any known thicknesses such as 4 mm, such as 6 mm, such as 8 mm, such as 10 mm, such as 12 mm, such as 14 mm, such as 16 mm, such as 18 mm, such as 20 mm, such as 22 mm, such as 24 mm, such as 26 mm, such as 28 mm, such as 30 mm.

The glazing joint may be provided in any appropriate thickness such as 4 mm, such as 6 mm, such as 8 mm, such as 10 mm, such as 12 mm, such as 14 mm, such as 16 mm, such as 18 mm, such as 20 mm, such as 22 mm, such as 24 mm, such as 26 mm, such as 28 mm, such as 30 mm.

In order to allow the sheets of glass to be fastened to the glazing joint, the glazing joint may define one or more fastening surfaces for fastening one side section of each sheet of glass to the glazing joint. In one embodiment, the glazing joint defines one fastening surface covering the entire outer surface of the glazing joint. In another embodiment, the glazing joint defines sections on its outer surface, each of such sections defines a fastening surface.

It will be appreciated that the sheets of glass and the glazing joints may be orientated in any direction such as horizontally, vertically or any direction transverse to the horizontal or vertical direction. Accordingly, the glazing joints may define an angle relative to the horizontal or vertical direction, such as 60 degrees or 45 degrees or 30 degrees or any other angle. As an example the sheets of glass and the glazing joints may form part of a ceiling e.g. used in connection with a sky light window or as a cover for a light emitting element.

In relation to glass walls it is a known problem that electrical wires/conductors cannot be concealed/hidden such that they are not visible. Accordingly, the glazing joint may in some embodiments comprise at least one electrical conductor. The conductor(s) may be integrated/incorporated into the glazing joint such that it/they is/are invisible to a viewer. It will be appreciated that in order for the conductors to be invisible, the glazing joint must comprise a non-transparent material. However, it will also be appreciated that the glazing joint may in some embodiments comprise a transparent material whereby the conductor(s) are visible but still integrated into the glazing joint. An advantage of the latter is that the conductor(s) are removed from the outer surface of a glass panel and that the conductors may be used as a decorative effect, which may be desirable in some architectural setups.

The glazing joint may comprise any number of electrical conductors. In one embodiment, the glazing joint comprises two conductors e.g. for providing a negative and a positive electrical conductor. In another embodiment, the glazing joint comprises three conductors e.g. for supplementing the negative and the positive conductors with a conductor for use as electrical earth. It will be appreciated that the glazing joint may comprise any other number of electrical conductors such as four, five, six, seven or eight.

In some embodiments, the conductors extend all the way through the glazing joint e.g. from a floor zone to a ceiling zone. In some embodiments, it is desirable that the conductors are used to supply electrical energy to an electrical apparatus attached to the glass wall, accordingly, the glazing joint may comprise an access point at which the at least one electrical conductor is accessible from an outer surface of the glazing joint. Examples of an electrical apparatus are, lamps, audio-visual devices such as an LCD or plasma monitor, or a loudspeaker, or an antenna e.g. for a wireless network. Alternatively, socket/outlet may be provided for such as a power socket/outlet, a socket/outlet for a network or a socket/outlet for an antenna.

The access point may be a point at which the electrical conductors may pass between the two sheets of glass without the glass being modifying (except from the provision of the previously mentioned recess provided in the side surfaces of the glass). In such an embodiment, it may be necessary to remove a part of the glazing joint in the area of the access point. As an example, the glazing joint may be a conventional electrical wire, which comprises a plurality of conductors each of which is electrically shielded by a shielding layer. Moreover, a conventional electrical wire may further comprise an outer shielding for shielding the already individually shielded wires. In embodiments wherein the glazing joint is constituted by the latter kind of electrical wire, the outer shielding may have to be removed in the area of the access point in order to allow the electrical conductors to pass through the passage defined between the two sheets of glass. It will be appreciated that it is advantageous that the individual shielding of each the conductors is not removed as the individual shielding prevent electrical contact between the conductors.

In an alternative embodiment, one or both the two sheets of glass are modified in the area of the access point so as to allow the electrical wire to pass between the two sheets of glass without removal of the outer shielding layer.

In one embodiment, an electrical apparatus such as a lamp is provided on one side of the glass wall in the area of the access point. In order to provide visually appealing solution, a cover may be provided on the opposite side of the glass wall in the area of the access point. The cover may be a non-transparent and may be a foil, a plate such as a wooden plate or a metal plate or any other kind of plate.

In one embodiment at least a part of the glazing joint comprises an antenna such as an antenna for a wireless network. In one embodiment, an antenna is provided in the entire length of the glazing joint. In another embodiment, the antenna is provided in a zone of the glazing joint. In one embodiment, one or more of the previously mentioned conductors may be used as an antenna.

In one embodiment, the glazing joint is tubular and thus defines a longitudinally extending passage/conduit. The conduit may be used as a flow channel for allowing a fluid to flow inside the glazing joint. The flow channel may be used for tap water supply, for transport of a cooling fluid for an air conditioning system or for transporting a fluid for fire extinguishing, such as tap water for a fire sprinklers provided in a ceiling and/or the glazing joint or a gas for quenching flames. In one embodiment, the glazing joint comprises one or more nozzles/sprinklers for dispensing a fluid flowing inside the glazing joint to an area outside the glazing joint. The nozzle may be adapted to vaporise a liquid dispensed through the nozzle. The nozzle may be provided as a passage extending from the conduit defined inside the glazing joint to an outer surface of the glazing joint. In one embodiment, the glazing joint is provided with a predetermined number of nozzles/sprinklers which may be spaced apart along the glazing joint. Alternatively, or as a supplement, the nozzles/sprinklers may be provided by means of a drilling tool after installation of the glazing joint.

In one embodiment, the nozzle is adapted to open when the temperature in the area of the nozzle is above a predetermined temperature. The latter may be achieved by means of conventional sprinkler technology.

In one embodiment, the glazing joints are couples to a controller which is adapted to pump water into the conduits when a fire is detected close to the glazing joint or anywhere in the building.

The glazing joint may be used for illuminative purposes. Accordingly, the glazing joint may comprise a wave guide for guiding light inside the glazing joint. In some embodiments, the waveguide may be adapted to scatter at least a part of the light to the surroundings whereby the glazing joint may be illuminated.

In one embodiment, one or more light emitting elements - such as LED's - may be provided inside the glazing joint. The light emitting elements may be arranged to emit light in a direction parallel with the longitudinal direction of the glazing joint. Alternatively, the light emitting elements may be arranged to emit light in a direction transverse to the longitudinal direction of the glazing joint. As an example the light emitting elements may be arranged to emit light into the sheets of glass.

In order to be able to use a glass wall as an exterior surface of a building, the glazing joint may be adapted to provide an air and/or water and/or wind tight seal between the glazing joint and two sheets of glass. In one embodiment, the seal is provided by means of an adhesive. According to the invention, at least a part of the
outer surface of the glazing joint comprises an adhesive for adhering the
sheets of glass to the glazing joint. The adhesive may also be provided
in the recess of the sheets of glass. As an example the adhesive may be an UV curable adhesive.

The fastening surface may be adapted to be adhered to the side section of a sheet of glass. In one embodiment, an adhesive is provided on the fastening surface. The adhesive may be covered by a removable release liner adapted to protect the adhesive prior to use, e.g. such that the adhesive is protected from loosing its tackiness due to contamination by dirt particles, which are often present at construction sites. Alternatively, or as a supplement, a layer of adhesive may be provided on the side surface of one of the sheets of glass so as to allow said sheet of glass to be adhered to the glazing joint.

The glazing joint may be made from a material which is more flexible than the glass, such as wood, PVC, silicone, natural and synthetic rubber. In one embodiment, light emitting means are integrated into the glazing joint, for providing a decorative effect or for allowing light to propagate inside the glass. Such light emitting means may be a light emitting diode.

The glazing joint may be adapted to allow two sheets of glass to be fastened to the glazing joint in an infinitive number of angular positions within a predetermined range of angels. As an example a first of two sheets of glass may - relative to the second sheet of glass - be adapted to be fastened to the glazing joint in an infinitive number of angular positions with in the range of 20-240 degrees, such as 60-300 degrees, such as 90-270 degrees, such as 120-240 degrees, such as 150-210 degrees.

In one embodiment, the abovementioned angular section is at least partly defined by the geometry of the sheets of glass, such as by their thickness, i.e. the distance between the front and the rear surface, or by the geometry of the side surface.

In order to allow the sheets of glass to be fastened/adhered to the glazing joint in an infinite number of positions, the glazing joint may define a circular cross-section. Moreover, one or more of the side surfaces of each sheet of glass may define a recess for receiving the glazing joint. The recess may have a concave cross-section corresponding to the outer surface of the glazing joint. Accordingly, the concave cross-section may define a section of a circle having substantially the same radius as the radius of a circular glazing element.

The glazing joint may be thicker than or thinner than the thickness of the sheets of glass. In one embodiment the cross-sectional thickness/diameter of the glazing joint is 125 percent of the thickness of at least one of the sheets of glass (i.e. the glazing joint is 25% thicker than the glass sheet), such as 150 percent, such as 175 percent, such as 200 percent, such as 250 percent, such as 300 percent such as 400 or 500 percent. In another embodiment, the cross-sectional thickness/diameter of the glazing joint is 80 percent of the thickness of at least one of the sheets of glass, such as 75 percent, such as 60 percent, such as 50 or 40 percent.

In one embodiment, the glazing joint is adapted to allow visual inspection through any part of the front and/or rear surface. Accordingly in the latter embodiment, the glazing joint is shaped such that when the glazing joint is fastened/adhered to the side surface of the sheet of glass, neither the front nor the rear surface is contacting the glazing joint. It will be appreciated that such an arrangement provides a cleaning friendly outer surface of the glass wall as well as an appealing design, with smooth glass surfaces which are not covered by means for joining the sheets of glass.

Moreover, the glazing joint may be transparent. Such transparent joints between sheets of glass in not possible when glasses are joined by means of conventional joint filler, as it is practically impossible to create joints without air pockets. However as the glazing joint according to the present invention may be manufactured under controlled industrial conditions, e.g. by extrusion or moulding, air pockets may be prevented. It will be appreciated, that prevention of such air pockets is desirable from an architectural point of view. Moreover, prevention of air pockets increases the strength of the joint, which is desirable from a construction point of view.

In a SECOND aspect the present invention relates to a sheet of glass adapted to be adhered to a glazing joint according to the first aspect of the invention, wherein one side surface of the sheet of glass defines a recess for receiving the glazing joint.

The invention according to the second aspect may comprise any combination of features and/or elements of the invention according to the first aspect.

In one embodiment, a bevelled surface is defined between the recess and each of the front and the rear surface. One advantage of providing a bevelled surface is that the possible relative angular positions of two sheets of glass having such bevelled surfaces are increased. It will be appreciated, that the more acute the angle defined between the bevelled surface and the front and/or rear surface of the sheet of glass is, the larger the angle between the two most extreme positions of two sheets of glass may be.

In a THIRD aspect, the present invention relates to a glass assembly comprising two sheets of glass according to the second aspect of the invention and a glazing joint according to the first aspect of the invention, wherein one side surface of each of the two sheets of glass is fastened to the glazing joint.

The invention according to the third aspect may comprise any combination of features and or elements of the invention according to the first and/or second aspect.

It will be appreciated that in some embodiments of the present invention, a glass wall is defined by means of a plurality of glazing joints and a plurality of sheets of glass.

In one embodiment, the one side surface of each of the two sheets of glass is adhered to the glazing joint.

In a FOURTH aspect, the present invention relates to a method of joining two sheets of glass according to the second aspect of the invention to a glazing joint according the first aspect of the invention, the method comprising the steps of:
- providing the two sheets of glass,
- providing the glazing joint,
- applying an adhesive to the outer surface of the glazing joint and/or one or more of the recesses of the sheets of glass, and
- moving the recesses of the sheets of glass into engagement with the glazing joint.

In one embodiment the method further comprises the step of curing the adhesive, e.g. by means of an UV-source.

### DESCRIPTION OF THE FIGURES

Figs. 1a and 1b disclose two sheets of glasses joined to each other by means of glazing joint according to the present invention,
Fig. 2 illustrates possible rotational positions of two sheets of glass joined to each other by means of a glazing joint according to the present invention,
Fig. 3 illustrates three sheets of glass joined to each other by means of the glazing joint according to the present invention,
Fig. 4 illustrates a curved glass joined to two sheets of glass by means of the glazing joint according to the present invention,
Fig. 5 illustrates a curved glass surface made by means of a plurality of sheets of glass and glazing joints according to the present invention, and
Figs. 6 and 7 illustrate two sheets of glass joint to each other by means of a glazing element according to the present invention so as to define a right angle relative to each other.

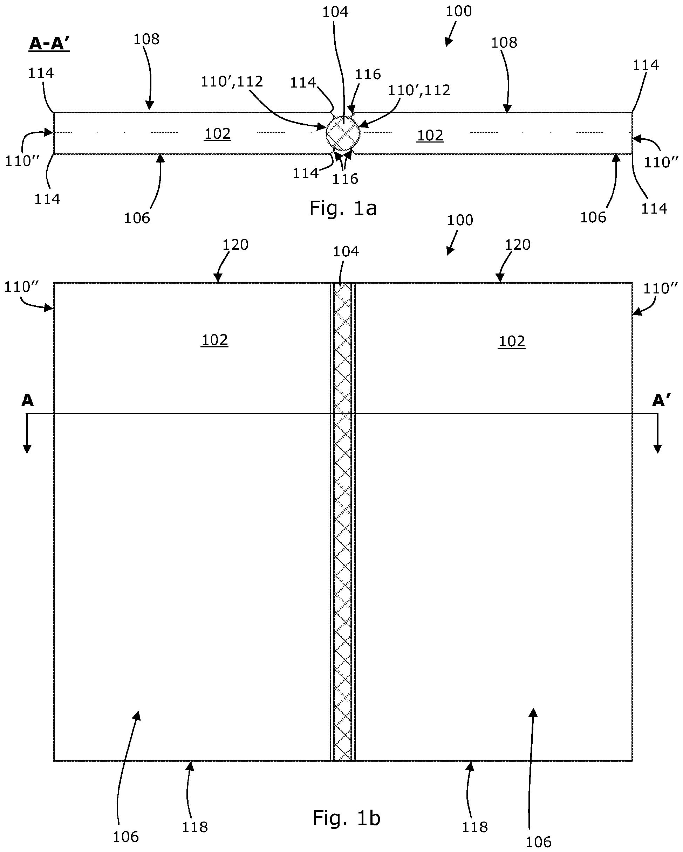

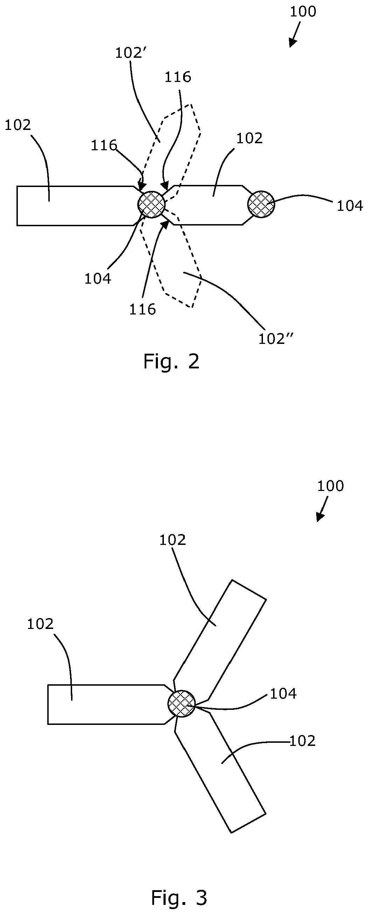

Fig. 1a and 1b illustrate a glazing assembly 100 comprising two sheets of glass 102 and a glazing joint 104. Fig. 1b is a front elevational view of the glazing assembly, and Fig. 1b illustrates a cross section A-A'. Each of the sheets of glass 102 defines a front surface 106 and a rear surface 108 which are interconnected by a side surface 110',110". On each sheet 102 in Figs. 1a and 1b, one edge 110" defines a flat surface, while the other of the side surfaces 110' defines a recess 112 for receiving the glazing joint 104. An edge 114 is defined in the transition from the front/rear surface 106,108 to the side surface 110. Moreover, the side surface 110' defines a bevelled surface 116 extending between the edge 114 and the recess 112. The provision of the bevelled surface 116 increases the possible relative rotational positions between the two sheets of glass 102 as is described in further detail below in relation to Fig. 2. The sheets of glass 102 are fastened to the glazing joint by means of an adhesive (not shown). The glazing assembly 100 may be erected in the following manner. Initially a first of the sheets of glass 102 may be erected. In most cases each sheet of glass 102 will be fixed at its bottom 118 and/or its top 120 e.g. to a floor or a ceiling, respectively. Such fixation may be achieved by means of a rail. Subsequently, the glazing joint 104 is attached to the recess 112 of the sheet of glass 102 by application of an adhesive to the recess and/or the outer surface of the glazing joint. Afterwards, the second sheet of glass 102 is moved into engagement with the glazing joint, e.g. by providing the sheet of glass the aforementioned rail and sliding the sheet of glass into contact with the glazing joint. It will be appreciated, that the adhesive is applied to the recess and/or the glazing joint before the sheet of glass is slided into contact with the glazing joint.

Fig. 2 illustrates the possible rotational positions of two sheets of glass 102',102". The two extreme positions of the sheet of glass 102',102" are indicated by a dotted lines, and it will be appreciated that the application of the bevelled surface 116, increases the angle between the two extreme positions, and that the more acute the angle defined between the bevelled surface 116 and a centre line (not shown) of the sheet of glass is, the larger the angle between the two extreme positions will be. Moreover, it will be appreciated that the larger the diameter of the glazing joint is - relative to the thickness of the sheet of glass - the larger the angle between the two extreme positions will be. Especially when the diameter of the glazing joint is larger that the thickness of the sheet of glass.

Fig. 3 illustrates a further advantage of the present invention, namely that the glazing joint 104 allows more than two sheets of glass to be fastened to the glazing joint. In the case of Fig. 3, three sheets of glass are fastened to the glazing joint. However again it will be appreciated, that the larger the diameter of the glazing joint is - relative to the thickness of the sheets of glass the more sheets of glass - may be fastened to the glazing joint. Especially it will be realised, that if the diameter of the glazing joint is larger that the thickness of the sheets of glass, a large number of such sheets of glass may be fastened to the glazing joint.

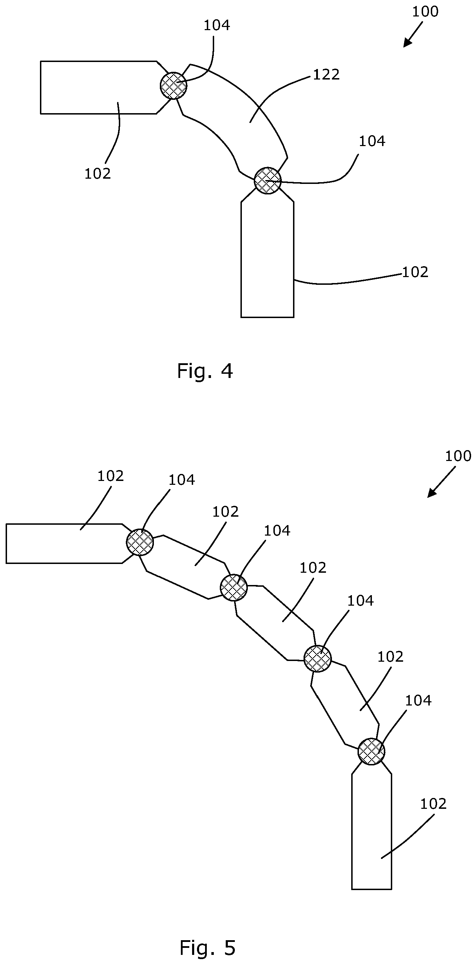

Fig. 3 and 4 illustrate two different embodiments of a curved glass assembly/wall 100. In the embodiment of Fig. 3, the glass assembly comprises a curved sheet of glass 122. As such curved sheet of glass 122 are normally expensive to manufacture, it will be appreciated that the present invention provides an inexpensive alternative by allowing two sheets of glass to be provided in any desired angle relative to each other. Accordingly, a cheap alternative to the solution of Fig. 3 is the provision of a large number short linear sheets of glass 102 and attaching said glasses to each other by means of the glazing joint according to the present invention.

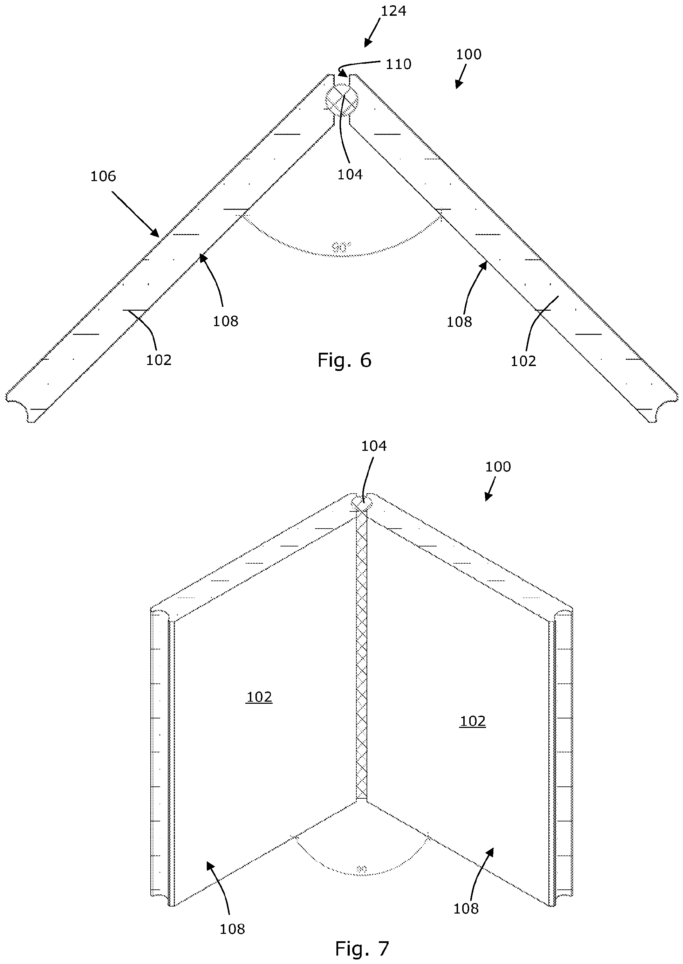

In the embodiment of Fig. 6 and 7, one end of each of two sheets 102 defines an side surface 110 which extends in a direction transverse to the longitudinal direction of the sheet of glass 102, which direction is different from 90 degrees. In the embodiment, the side surface 110 extends in a direction which defines a 45 degree angle with the front and the rear surface 106,108 of the sheet of glass 102. It will be appreciated, that the provision of such a side surface 110 limits the possible relative rotational positions of the two sheets of glass, while providing a sharper corner point 124, which may be desirable from an architectural point of view. Moreover, it will be appreciated that the glazing joint need not be modified in the embodiment of Figs. 6 and 7 as the sharp corner point 124 is provided by processing the sheets of glass 102 in a different way.

## Claims

1. A glazing joint for joining at least two sheets of glass to each other, each glass defining a front and a rear surface interconnected by a side surface defining a recess for receiving at least a part of the glazing joint, wherein the glazing joint has a circular cross-section and defines an outer surface adapted to be received in the recess of the two sheets of glass so as to allow the sheets of glass to be fastened to the glazing joint in an infinite number of angular positions relative to each other
**characterised in that**, wherein at least a part of the outer surface of the glazing joint comprises an adhesive for adhering the sheets of glass to the glazing joint.

2. A glazing joint according to claim 1, wherein the glazing joint comprises at least one electrical conductor.

3. A glazing joint according to claim 2, wherein the glazing Joint comprises an access point at which the at least one electrical conductor is accessible from an outer surface of the glazing joint.

4. A glazing joint according to any of the preceding claims, wherein the glazing joint comprises a flow channel for allowing a fluid to flow inside the glazing joint.

5. A glazing joint according to claim 4, wherein the glazing joint comprises one or more nozzles for dispensing a fluid flowing inside the glazing joint to an area outside the glazing joint.

6. A glazing joint according to claim 5, wherein the nozzle is adapted to vaporise a liquid dispensed through the nozzle.

7. A glazing joint according to claim 5 or 6, wherein the nozzle is adapted to open when the temperature in the area of the nozzle is above a predetermined temperature.

8. A glazing joint according to any of the preceding claims, wherein the glazing joint comprises a wave guide for guiding light inside the glazing joint.

9. A glazing joint according to any of the preceding claims, wherein one or more light emitting elements are provided inside the glazing joint.

10. A glazing joint according to any of the preceding claims, wherein the glazing joint is adapted to provide an air and/or water and/or wind tight seal between the glazing joint and two sheets of glass.

11. A glass assembly comprising two sheets of glass according to any of claims 1-10 and a glazing joint according to any of claims 1-10, wherein one side surface of each of the two sheets of glass is adhered to the glazing joint.

12. A method of joining two sheets of glass according to any of claims 1-10 to a glazing joint according to any of claims 1-10, the method comprising the steps of:
- providing the two sheets of glass,
- providing the glazing joint,
- applying an adhesive to the outer surface of the glazing joint and/or one or more of the recesses of the sheets of glass, and
- moving the recesses of the sheets of glass into engagement with the glazing joint.

13. An assembly according to claim 11 of two sheets of glass interconnected by a glazing joint,
wherein the glazing joint comprising at least one electrical conductor.

14. An assembly according to claim 11 of two sheets of glass interconnected by a glazing joint,
wherein the glazing joint comprises a fluid flow channel for allowing a fluid to flow inside the glazing joint.

15. An assembly according to claim 14, wherein the glazing joint comprises one or more nozzles for dispensing a fluid flowing inside the glazing joint to an area outside the glazing joint.

## Patentansprüche

1. Verglasungsverbindung zum Verbinden von mindestens zwei Glasplatten, wobei jedes Glas eine vordere und eine hintere Fläche definiert, die durch eine Seitenfläche miteinander verbunden sind, welche eine Aussparung zum Aufnehmen zumindest eines Teils der Verglasungsverbindung definiert, wobei die Verglasungsverbindung einen kreisförmigen Querschnitt aufweist und eine Außenfläche definiert, welche dafür geeignet ist, in der Aussparung der zwei Glasplatten aufgenommen zu werden, um zu ermöglichen, dass die Glasplatten in einer unbegrenzten Anzahl von Winkelpositionen zueinander an der Verglasungsverbindung befestigt werden,
**dadurch gekennzeichnet, dass** zumindest ein Teil der Außenfläche der Verglasungsverbindung einen Klebstoff zum Kleben der Glasplatten an die Verglasungsverbindung aufweist.

2. Verglasungsverbindung nach Anspruch 1, wobei die Verglasungsverbindung mindestens einen elektrischen Leiter aufweist.

3. Verglasungsverbindung nach Anspruch 2, wobei die Verglasungsverbindung einen Zugangspunkt aufweist, an welchem der mindestens eine elektrische Leiter von einer Außenfläche der Verglasungsverbindung zugänglich ist.

4. Verglasungsverbindung nach einem der vorhergehenden Ansprüche, wobei die Verglasungsverbindung einen Flusskanal aufweist, um einem Fluid zu ermöglichen, innerhalb der Verglasungsverbindung zu fließen.

5. Verglasungsverbindung nach Anspruch 4, wobei die Verglasungsverbindung eine oder mehrere Düsen zum Abgeben eines Fluids aufweist, welches innerhalb der Verglasungsverbindung zu einem Bereich außerhalb der Verglasungsverbindung fließt.

6. Verglasungsverbindung nach Anspruch 5, wobei die Düse dafür geeignet ist, eine Flüssigkeit zu zerstäuben, die durch die Düse abgegeben wird.

7. Verglasungsverbindung nach Anspruch 5 oder 6, wobei die Düse dafür geeignet ist, sich zu öffnen, wenn die Temperatur im Bereich der Düse über einer vorgegebenen Temperatur liegt.

8. Verglasungsverbindung nach einem der vorhergehenden Ansprüche, wobei die Verglasungsverbindung einen Wellenleiter zum Leiten von Licht innerhalb der Verglasungsverbindung aufweist.

9. Verglasungsverbindung nach einem der vorhergehenden Ansprüche, wobei innerhalb der Verglasungsverbindung ein oder mehrere lichtemittierende Elemente vorgesehen sind.

10. Verglasungsverbindung nach einem der vorhergehenden Ansprüche, wobei die Verglasungsverbindung dafür geeignet ist, eine luft- und/oder wasser- und/oder winddichte Versiegelung zwischen der Verglasungsverbindung und zwei Glasplatten bereitzustellen.

11. Glasbaugruppe, aufweisend zwei Glasplatten nach einem der Ansprüche 1 bis 10 und eine Verglasungsverbindung nach einem der Ansprüche 1 bis 10, wobei eine Seitenfläche jeder der zwei Glasplatten an der Verglasungsverbindung klebt.

12. Verfahren zum Verbinden von zwei Glasplatten nach einem der Ansprüche 1 bis 10 mit einer Verglasungsverbindung nach einem der Ansprüche 1 bis 10, wobei das Verfahren folgende Schritte umfasst:
- Bereitstellen der zwei Glasplatten,
- Bereitstellen der Verglasungsverbindung,
- Aufbringen eines Klebstoffs an die Außenfläche der Verglasungsverbindung und/oder einen oder mehrere der Aussparungen der Glasplatten und
- Bewegen der Aussparungen der Glasplatten in Eingriff mit der Verglasungsverbindung.

13. Baugruppe nach Anspruch 11 aus zwei Glasplatten, die durch eine Verglasungsverbindung verbunden sind, wobei die Verglasungsverbindung mindestens einen elektrischen Leiter aufweist.

14. Baugruppe nach Anspruch 11 aus zwei Glasplatten, die durch eine Verglasungsverbindung verbunden sind, wobei die Verglasungsverbindung einen Flusskanal aufweist, um einem Fluid zu ermöglichen, innerhalb der Verglasungsverbindung zu fließen.

15. Baugruppe nach Anspruch 14, wobei die Verglasungsverbindung eine oder mehrere Düsen zum Abgeben eines Fluids aufweist, welches innerhalb der Verglasungsverbindung zu einem Bereich außerhalb der Verglasungsverbindung fließt.

## Revendications

1. Joint de vitrage pour joindre au moins deux vitres l'une à l'autre, chaque vitre définissant une surface avant et arrière interconnectées par une surface latérale définissant un évidement pour recevoir au moins une partie du joint de vitrage, dans lequel le joint de vitrage présente une section transversale circulaire et définit une surface extérieure adaptée pour être reçue dans l'évidement des deux vitres de façon à permettre aux vitres d'être fixées au joint de vitrage dans un nombre infini de positions angulaires l'une par rapport à l'autre,
**caractérisé en ce qu'**au moins une partie de la surface extérieure du joint de vitrage comprend un adhésif pour faire adhérer les vitres au joint de vitrage.

2. Joint de vitrage selon la revendication 1, dans lequel le joint de vitrage comprend au moins un conducteur électrique.

3. Joint de vitrage selon la revendication 2, dans lequel le joint de vitrage comprend un point d'accès sur lequel l'au moins un conducteur électrique est accessible depuis une surface extérieure du joint de vitrage.

4. Joint de vitrage selon l'une quelconque des revendications précédentes, dans lequel le joint de vitrage comprend un canal d'écoulement pour permettre à un fluide de s'écouler à l'intérieur du joint de vitrage.

5. Joint de vitrage selon la revendication 4, dans lequel le joint de vitrage comprend une ou plusieurs buse(s) pour distribuer un fluide s'écoulant à l'intérieur du joint de vitrage vers une zone hors du joint de vitrage.

6. Joint de vitrage selon la revendication 5, dans lequel la buse est adaptée pour vaporiser un liquide distribué à travers la buse.

7. Joint de vitrage selon la revendication 5 ou 6, dans lequel la buse est adaptée pour être ouverte lorsque la température au niveau de la buse est au-dessus d'une température prédéterminée.

8. Joint de vitrage selon l'une quelconque des revendications précédentes, dans lequel le joint de vitrage comprend un guide d'ondes pour guider la lumière à l'intérieur du joint de vitrage.

9. Joint de vitrage selon l'une quelconque des revendications précédentes, dans lequel un ou plusieurs élément(s) émetteur(s) de lumière sont prévus à l'intérieur du joint de vitrage.

10. Joint de vitrage selon l'une quelconque des revendications précédentes, dans lequel le joint de vitrage est adapté pour une étanchéité à l'air et/ou à l'eau et/ou au vent entre le joint de vitrage et les deux vitres.

11. Assemblage en verre comprenant deux vitres selon l'une quelconque des revendications 1 - 10 sur un joint de vitrage selon l'une quelconque des revendications 1 - 10, dans lequel une surface latérale de chacune des deux vitres est collée au joint de vitrage.

12. Procédé de jointage de deux vitres selon l'une quelconque des revendications 1 - 10 sur un joint de vitrage selon l'une quelconque des revendications 1 - 10, le procédé comprenant les étapes de :
- fourniture des deux vitres,
- fourniture du joint de vitrage,
- application d'un adhésif sur la surface extérieure du joint de vitrage et/ou un ou plusieurs des évidements des vitres en engagement, et
- déplacement des évidements des vitres en engagement avec le joint de vitrage.

13. Assemblage selon la revendication 11 de deux vitres interconnectées par un joint de vitrage, dans lequel le joint de vitrage comprend au moins un conducteur électrique.

14. Assemblage selon la revendication 11 de deux vitres interconnectées par un joint de vitrage, dans lequel le joint de vitrage comprend un canal d'écoulement fluidique pour permettre à un fluide de s'écouler à l'intérieur du joint de vitrage.

15. Assemblage selon la revendication 14, dans lequel le joint de vitrage comprend une ou plusieurs buse(s) pour distribuer un fluide s'écoulant à l'intérieur du joint de vitrage vers une zone à l'extérieur du joint de vitrage.
